# EUROPEAN PATENT SPECIFICATION

(11) **EP 3 985 084 B1**
(45) Date of publication and mention of the grant of the patent: **10.12.2025**
(21) Application number: 20822556.5
(22) Date of filing: 11.06.2020
(51) Int. Cl.: C09K 15/18, C08K 5/18, C08L 27/12, C08L 83/04, C08L 101/00

(54) **ANTI OXIDANT SUPPLY COMPOSITION, ANTI OXIDANT SUPPLY MATERIAL, AND ANTI OXIDANT SUPPLY METHOD**
ZUSAMMENSETZUNG ZUR BEREITSTELLUNG VON ANTIOXIDATIONSMITTEL, MATERIAL ZUR BEREITSTELLUNG VON ANTIOXIDATIONSMITTEL UND VERFAHREN ZUR BEREITSTELLUNG VON ANTIOXIDATIONSMITTEL
COMPOSITION D'APPORT D'AGENT ANTIOXYDANT, MATÉRIAU D'APPORT D'AGENT ANTIOXYDANT, ET PROCÉDÉ D'APPORT D'AGENT ANTIOXYDANT

(30) Priority: 13.06.2019 JP 2019110186
(43) Date of publication of application: 20.04.2022
(73) Proprietor: BRIDGESTONE CORPORATION, Chuo-ku Tokyo 104-8340 (JP)
(72) Inventor: FUKUSHIMA, Atsushi, Tokyo 104-8340 (JP); KANNO, Hiroshi, Tokyo 104-8340 (JP); TAHARA, Seiichi, Tokyo 104-8340 (JP); MIURA, Takahiro, Tokyo 104-8340 (JP); URATA, Tomohiro, Tokyo 104-8340 (JP)
(74) Representative: Marks & Clerk LLP
(86) International application number: PCT/JP2020/023109
(87) International publication number: WO 2020/250996

(56) References cited:
- WO-A1-2009/025044
- WO-A1-2009/025044
- JP-A- 2002 146 069
- JP-A- 2007 224 166
- JP-A- 2007 224 166
- JP-A- 2009 220 692
- JP-A- 2010 260 258
- JP-A- 2013 095 382
- JP-A- 2015 042 700
- JP-A- H09 208 750
- JP-A- H11 278 008

## Description

### TECHNICAL FIELD

The present disclosure relates to an anti oxidant supply composition, an anti oxidant supply material, and an anti oxidant supply method.

### BACKGROUND

Rubber articles used outdoors, such as tires, hoses, belts, and crawlers, typically contain anti oxidant in order to prevent deterioration such as caused by ultraviolet rays or ozone.

However, an anti oxidant in a rubber article is consumed over time and its content decreases. Hence, after the rubber article is used for a certain period, the rubber article is susceptible to cracks (i.e. the ozone resistance tends to decrease) due to deterioration such as caused by ultraviolet rays or ozone.

Such decrease in ozone resistance may be suppressed by increasing the amount of the anti oxidant contained in the rubber article based on the amount by which the anti oxidant decreases. If the content of the anti oxidant in the rubber article is increased, however, the surface of the rubber article turns brown and the appearance worsens. Moreover, in the case where the rubber article is a tire, there is a possibility that adhesiveness to other members such as plies decreases.

There are techniques such as improving a polymer component in a rubber article and providing a protective film to prevent anti oxidant from coming off. However, these techniques only have insufficient ozone resistance improving effects, and also cause cost increases.

In view of this, a technique of adding, to a rubber article used for a certain period, anti oxidant afterward to suppress a decrease in ozone resistance is developed.

For example, JP 2003-2991 A (PTL 1) discloses a technique whereby an elastomer such as rubber is brought into contact with a powdery or liquid anti oxidant by burying or immersion for a certain time to allow the anti oxidant to permeate into the elastomer and suppress deterioration of the elastomer.

WO 2009/25044 A1 (PTL 2) and JP 2007-224166 A (PTL 3) disclose techniques whereby an adhesive material for aging prevention containing a polymer component such as rubber and an anti oxidant is attached to a surface of a crosslinked rubber for a certain time to suppress aging of the crosslinked rubber.

### CITATION LIST

### Patent Literature

PTL 1: JP 2003-2991 A
PTL 2: WO 2009/25044 A1
PTL 3: JP 2007-224166 A

### SUMMARY

### (Technical Problem)

With the technique in PTL 1, the permeation of the anti oxidant into the rubber article is insufficient. There is thus a demand to develop a technique that enables more effective replenishment with an anti oxidant.

With the techniques in PTL 2 and PTL 3, the permeation of the anti oxidant into the rubber article is insufficient, and the adhesive material for aging prevention needs to be attached to the rubber article for a long time. There is thus a demand to develop a technique that enables more effective and quicker replenishment with an anti oxidant.

It could therefore be helpful to provide an anti oxidant supply composition and an anti oxidant supply material that enable replenishment of a rubber article with an anti oxidant without taking a long time.

It could also be helpful to provide an anti oxidant supply method that enables replenishment of a tire with an anti oxidant without taking a long time and effectively suppresses a decrease in ozone resistance.

### (Solution to Problem)

We provide the following:
An anti oxidant supply composition according to the present disclosure is an anti oxidant supply composition comprising: a base material and 5 mass% or more of an amine-based anti oxidant, wherein a solubility parameter (SP value) of the base material is 6.7 (cal/cm³)^{1/2} or more and less than 7.8 (cal/cm³)^{1/2}, wherein the base material contains at least a silicone-based polymer.

With this structure, a rubber article can be replenished with the anti oxidant without taking a long time.

In the anti oxidant supply composition according to the present disclosure, the base material contains at least a silicone-based polymer, and may further contain a fluorine-based polymer. In this case, the rubber article can be replenished with the anti oxidant more efficiently.

Preferably, in the anti oxidant supply composition according to the present disclosure, the amine-based anti oxidant contains at least N-(1,3-dimethylbutyl)-N'-phenyl-p-phenylenediamine. In this case, the rubber article can be replenished with the anti oxidant more efficiently and reliably.

Preferably, in the anti oxidant supply composition according to the present disclosure, the SP value of the base material is 6.7 (cal/cm³)^{1/2} to 7.6 (cal/cm³)^{1/2}. In this case, the rubber article can be replenished with the anti oxidant more efficiently and reliably without causing separation between the base material and the anti oxidant.

An anti oxidant supply material according to the present disclosure comprises the above-described anti oxidant supply composition according to the present disclosure.

With this structure, the rubber article can be replenished with the anti oxidant efficiently and reliably without taking a long time.

Preferably, the anti oxidant supply material according to the present disclosure is in a form of a sheet of less than 0.5 mm in thickness. Such an anti oxidant supply material has excellent processability, and enables replenishment of the rubber article with the anti oxidant efficiently and reliably.

An anti oxidant supply method according to the present disclosure is a method of supplying anti oxidant to a tire, comprising maintaining, for 8 hours or more, a state in which an outer surface of the tire is in contact with an anti oxidant supply material that contains an anti oxidant supply composition containing a base material and 5 mass% or more of an amine-based anti oxidant, wherein the base material has a solubility parameter (SP value) of 6.7 (cal/cm³)^{1/2} or more and less than 7.8 (cal/cm³)^{1/2}, wherein the base material contains at least a silicone-based polymer.

With this method, the tire can be replenished with the anti oxidant efficiently and reliably without taking a long time, and a decrease in ozone resistance can be effectively suppressed.

### (Advantageous Effect)

It is therefore possible to provide an anti oxidant supply composition and an anti oxidant supply material that enable replenishment of a rubber article with anti oxidant without taking a long time.

It is also possible to provide an anti oxidant supply method that enables replenishment of a tire with anti oxidant without taking a long time and effectively suppresses a decrease in ozone resistance.

### BRIEF DESCRIPTION OF THE DRAWINGS

In the accompanying drawings:

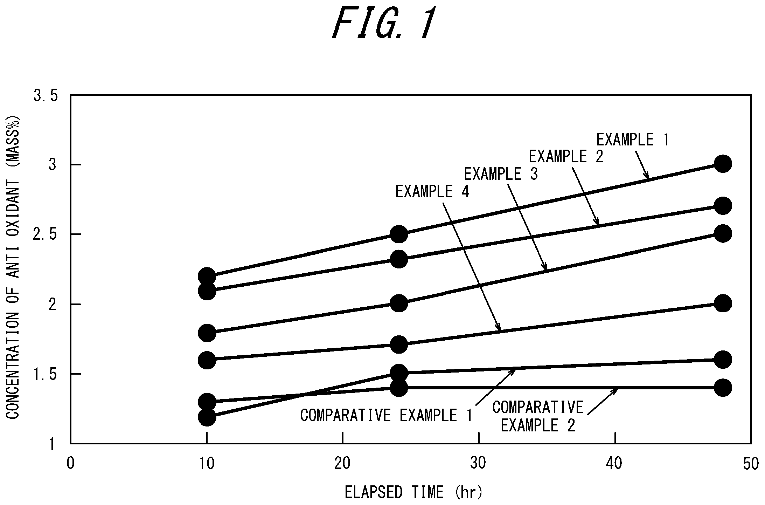

FIG. 1 is a graph illustrating temporal changes in anti oxidant concentration near the surface of a rubber for each sample in examples.

### DETAILED DESCRIPTION

An embodiment of an anti oxidant supply composition, an anti oxidant supply material, and an anti oxidant supply method according to the present disclosure will be described below.

### <Anti oxidant supply composition>

An anti oxidant supply composition according to the present disclosure includes a base material and 5 mass% or more of an amine-based anti oxidant.

In the anti oxidant supply composition according to the present disclosure, the solubility parameter (SP value) of the base material is 6.7 (cal/cm³)^{1/2} or more and less than 7.8 (cal/cm³)^{1/2}.

Typically, the SP value of anti oxidant is higher than the SP value of a rubber component in a rubber article. Hence, with conventional techniques, the rubber article cannot be sufficiently replenished with the anti oxidant from the anti oxidant supply composition because the compatibility between the anti oxidant and the rubber component is low. In view of this, according to the present disclosure, a material having a lower SP value than a typical rubber component (specifically, a material whose SP value is less than 7.8 (cal/cm³)^{1/2}) and lower in compatibility with anti oxidant is used as a base material in an anti oxidant supply composition. This facilitates transfer of the anti oxidant into the rubber article containing the rubber component having relatively high compatibility with the anti oxidant, so that the rubber article can be replenished with the anti oxidant more efficiently and reliably without an increase in cost.

Moreover, given that the anti oxidant comes off the rubber article over time, the use of the anti oxidant supply composition according to the present disclosure can replenish the rubber article with the anti oxidant and thus suppress a decrease in ozone resistance in the rubber article.

The base material contained in the anti oxidant supply composition according to the present disclosure is not limited as long as its SP value is 6.7 (cal/cm³)^{1/2} or more and less than 7.8 (cal/cm³)^{1/2}.

The SP value of the base material is less than 7.8 (cal/cm³)^{1/2} and preferably 7.6 (cal/cm³)^{1/2} or less, from the viewpoint of replenishing the rubber article with the anti oxidant more efficiently and reliably. The SP value of the base material is 6.7 (cal/cm³)^{1/2} or more, from the viewpoint of preventing separation between the base material and the anti oxidant. That is, the SP value of the base material is preferably 6.7 (cal/cm³)^{1/2} to 7.6 (cal/cm³)^{1/2}.

Examples of the base material include various rubbers, polystyrene-based polymers, polyolefin-based polymers, polyvinyl chloride-based polymers, polyurethane-based polymers, polyester-based polymers, polyamide-based polymers, silicone-based polymers, and fluorine-based polymers.

Of these, the base material contains at least a silicone-based polymer and may further contain a fluorine-based polymer. The base material contains at least a silicone-based polymer, from the viewpoint of further ensuring that the SP value is less than 7.8 (cal/cm³)^{1/2} and replenishing the rubber article with the anti oxidant more efficiently.

The silicone-based polymer is a polymer containing silicone (i.e. having a main skeleton by a siloxane bond). Examples of the silicone-based polymer include silicone grease, silicone oil, silicone rubber, and silicone emulsion. These silicone-based polymers may be used alone or in combination of two or more.

The silicone-based polymer may be unmodified or modified as long as its SP value is within the range according to the present disclosure, and a commercially available product may be used.

The fluorine-based polymer is a polymer containing fluorine. Examples of the fluorine-based polymer include polytetrafluoroethylene, fluororesins such as partially fluorinated resins and fluorinated resin copolymers, and fluororubbers. These fluorine-based polymers may be used alone or in combination of two or more.

The fluorine-based polymer is not limited as long as its SP value is within the range according to the present disclosure, and a commercially available product may be used.

The content of the base material in the anti oxidant supply composition according to the present disclosure needs to be 95 mass% or less, from the relationship with the content of the anti oxidant. The content of the base material is preferably 90 mass% or less and more preferably 85 mass% or less, from the viewpoint of enhancing the efficiency of the replenishment of the rubber article with the anti oxidant. The content of the base material is preferably 80 mass% or more, from the viewpoint of the handling easiness of the composition and the saturation of the effects.

The anti oxidant contained in the anti oxidant supply composition according to the present disclosure is not limited as long as its content is 5 mass% or more.

The content of the anti oxidant needs to be 5 mass% or more, from the viewpoint of replenishing the rubber article with the anti oxidant efficiently and reliably. From the same viewpoint, the content of the anti oxidant is preferably 8 mass% or more, and more preferably 10 mass% or more. The content of the anti oxidant is preferably 30 mass% or less, from the viewpoint of the handling easiness of the composition and the saturation of the effects.

The type of the anti oxidant is not limited, and may be changed as appropriate depending on the type of the rubber article to be replenished with the anti oxidant. Examples of the anti oxidant include amine-based anti oxidants, phenol-based anti oxidants, benzimidazole-based anti oxidants, and thiourea-based anti oxidants. These anti oxidants may be contained alone or in combination of two or more, provided at least an amine-based anti oxidant is contained.

N-(1,3-dimethylbutyl)-N'-phenyl-p-phenylenediamine from among amine-based anti oxidants is preferably contained, from the viewpoint of replenishing the rubber article with the anti oxidant more efficiently and reliably.

As a result of containing the foregoing base material and amine-based anti oxidant, the anti oxidant supply composition according to the present disclosure can achieve the desired effect (i.e. the rubber article can be replenished with the anti oxidant efficiently and reliably).

The anti oxidant supply composition may further contain components (hereafter referred to as "other components") other than the foregoing base material and anti oxidant as appropriate, from the viewpoint of achieving other effects such as processability, handling easiness, and adhesiveness to the rubber article.

Examples of the other components include fillers, plasticizers, vulcanization accelerators, and sulfur.

The form of the anti oxidant supply composition according to the present disclosure is not limited, and may be any of various forms such as liquid, granular, emulsion, rubber-like, and gel-like depending on the type of the base material.

### <Anti oxidant supply material>

An anti oxidant supply material according to the present disclosure includes the foregoing anti oxidant supply composition according to the present disclosure.

As a result of containing the anti oxidant supply composition according to the present disclosure, the anti oxidant supply material according to the present disclosure can replenish the rubber article with the anti oxidant efficiently and reliably.

The anti oxidant supply material according to the present disclosure contains the anti oxidant supply composition according to the present disclosure as a main component. The anti oxidant supply material according to the present disclosure may further contain components other than the anti oxidant supply composition as appropriate, from the viewpoint of achieving other effects such as handling easiness, design characteristics, adhesiveness to the rubber article, and deterioration prevention.

The use form of the anti oxidant supply material according to the present disclosure is not limited, and may be changed as appropriate depending on the required performance.

For example, the anti oxidant supply material according to the present disclosure may be applied to the rubber article in the form of a liquid or a paste, sprayed on the rubber article in the form of a spray, or attached to the rubber article in the form of a sheet.

The anti oxidant supply material according to the present disclosure is preferably in the form of a sheet, from the viewpoint of replenishing the rubber article with the anti oxidant efficiently and reliably. The anti oxidant supply material according to the present disclosure is more preferably in the form of a sheet of less than 0.5 mm in thickness, from the viewpoint of maintaining high processability. To replenish the rubber article with the anti oxidant efficiently and reliably, the thickness of the sheet-shaped anti oxidant supply material is preferably 0.05 mm or more.

### <Anti oxidant supply method>

An anti oxidant supply method according to the present disclosure is a method of supplying anti oxidant to a tire, including maintaining, for 8 hours or more, a state in which the tire is in contact with the foregoing anti oxidant supply material according to the present disclosure.

According to the present disclosure, a material having a lower SP value than a rubber component (specifically, a material whose SP value is 6.7 (cal/cm³)^{1/2} or more and less than 7.8 (cal/cm³)^{1/2}) and lower in compatibility with anti oxidant is used as the base material of the anti oxidant supply composition included in the anti oxidant supply material, and also the time during which the anti oxidant supply material and the outer surface of the tire are contact with each other is set to 8 hours or more. This facilitates transfer of the anti oxidant into the tire, so that the tire can be replenished with the anti oxidant more efficiently and reliably without taking a long time.

Moreover, given that the anti oxidant comes off the tire over time, the use of the anti oxidant supply composition according to the present disclosure can replenish the tire with the anti oxidant efficiently and reliably and thus suppress a decrease in ozone resistance in the tire effectively.

The anti oxidant supply composition and the anti oxidant supply material used in the anti oxidant supply method according to the present disclosure have the same structures as the foregoing anti oxidant supply composition and anti oxidant supply material according to the present disclosure.

In the anti oxidant supply method according to the present disclosure, the time during which the anti oxidant supply material and the outer surface of the tire are in contact with each other needs to be 8 hours or more, from the viewpoint of replenishing the tire with the anti oxidant reliably. From the same viewpoint, the time during which the anti oxidant supply material and the outer surface of the tire are in contact with each other is preferably 18 hours or more, and more preferably 24 hours or more.

The temperature of the anti oxidant supply material when the anti oxidant supply material and the outer surface of the tire are in contact with each other is preferably 25 °C.

The type of the tire used in the anti oxidant supply method according to the present disclosure is not limited, and for example any of passenger vehicle tires, motorcycle tires, construction vehicle tires, and aircraft tires may be selected as appropriate.

The part of the tire brought into contact with the anti oxidant supply material may be any part of the outer surface of the tire, and may be selected as appropriate depending on the state in which the anti oxidant is contained. From the viewpoint of enhancing the effect of suppressing a decrease in ozone resistance, for example, the part of the tire brought into contact with the anti oxidant supply material is preferably a sidewall portion, a tread groove, or a shoulder portion (near the boundary between the tread portion and the sidewall portion) of the tire. This is because cracks tend to occur in the sidewall portion due to ozone deterioration.

### EXAMPLES

The presently disclosed techniques will be described in more detail below by way of examples, although the present disclosure is not limited to the following examples.

### <Examples 1 to 4 and Comparative Examples 1 to 2>

Samples of anti oxidant supply compositions of Examples 1 to 4 and Comparative Examples 1 to 2 were produced under the following conditions.

### (Example 1)

0.5 g (10 mass%) of N-(1,3-dimethylbutyl)-N'-phenyl-p-phenylenediamine ("NOCRAC 6C" made by Ouchi Shinko Chemical Industrial Co., Ltd.) as an anti oxidant was added to 4.5 g of silicone grease ("MOLYKOTE FS-50" made by Dow Corning Toray Co., Ltd., SP value: 7.0 (cal/cm³)^{1/2}) and mixed to produce a sample of an anti oxidant supply composition.

### (Example 2)

A sample of an anti oxidant supply composition was produced under the same conditions as in Example 1, except that the amount of the anti oxidant added is 0.24 g (5 mass%).

### (Example 3)

0.8 g (16 mass%) of N-(1,3-dimethylbutyl)-N'-phenyl-p-phenylenediamine ("NOCRAC 6C" made by Ouchi Shinko Chemical Industrial Co., Ltd.) as an anti oxidant is added to 4.2 g of a silicone sealant ("KE-45" made by Shin-Etsu Chemical Co., Ltd., SP value: 7.0 (cal/cm³)^{1/2}) and mixed to produce a sample of an anti oxidant supply composition.

### (Example 4)

1.2 g (24 mass%) of N-(1,3-dimethylbutyl)-N'-phenyl-p-phenylenediamine ("NOCRAC 6C" made by Ouchi Shinko Chemical Industrial Co., Ltd.) as an anti oxidant is added to 3.8 g of silicone wax ("KP-561P" made by Shin-Etsu Chemical Co., Ltd., SP value: 7.0 (cal/cm³)^{1/2}) and mixed to produce a sample of an anti oxidant supply composition.

### (Comparative Example 1)

0.5 g (10 mass%) of N-(1,3-dimethylbutyl)-N'-phenyl-p-phenylenediamine ("NOCRAC 6C" made by Ouchi Shinko Chemical Industrial Co., Ltd.) as an anti oxidant is added to 4.5 g of liquid SBR rubber ("L-SBR-841" made by Kuraray Co., Ltd., SP value: 8.2 (cal/cm³)^{1/2}) and mixed to produce a sample of an anti oxidant supply composition.

### (Comparative Example 2)

0.15 g (3 mass%) of N-(1,3-dimethylbutyl)-N'-phenyl-p-phenylenediamine ("NOCRAC 6C" made by Ouchi Shinko Chemical Industrial Co., Ltd.) as an anti oxidant is added to 4.85 g of silicone wax ("KP-561P" made by Shin-Etsu Chemical Co., Ltd., SP value: 7.0 (cal/cm³)^{1/2}) and mixed to produce a sample of an anti oxidant supply composition.

### <Evaluation>

The sample of the anti oxidant supply composition of Example 1 in the form of a sheet of 0.5 mm in thickness was applied onto a rubber sheet.

Subsequently, the obtained sample of the anti oxidant supply sheet was placed on four overlapping rubber sheets each having a thickness of 1mm, and left for a certain time (elapsed time) at 25 °C, as illustrated in FIG. 1. The following evaluation (1) was then performed.

Each of the samples of the anti oxidant supply compositions of Examples 2, 3, and 4 and Comparative Examples 1 and 2 in the form of a sheet of 0.5 mm in thickness is applied onto a rubber sheet.

Subsequently, the obtained sample of the anti oxidant supply sheet is placed on four overlapping rubber sheets each having a thickness of 1mm, and left for a certain time (elapsed time) at 25 °C, as illustrated in FIG. 1. The following evaluation (1) is then performed.

### (1) Temporal change of anti oxidant supply amount

The anti oxidant concentration (mass%) near the surface of the rubber sheet (the range of 1 mm in depth from the part in contact with the anti oxidant supply sheet) after 10 hours, after 24 hours, and after 48 hours is measured by gas chromatography after extraction using a mixture solvent of tetrahydrofuran and chloroform, and the temporal change of the supply amount to the rubber sheet was derived by a calibration curve method. The same measurement and evaluation were performed for the sample produced using the anti oxidant supply composition of Example 1. The results are indicated in Table 1 and FIG. 1.

**[Table 1]**

| | Concentration of age resistor near surface of rubber sheet (mass%) | | |
|---|---|---|---|
| | After 10 hours | After 24 hours | After 48 hours |
| Example 1 | 1.8 | 2.0 | 2.5 |
| Example 2 | 1.6 | 1.7 | 2.0 |
| Example 3 | 2.1 | 2.3 | 2.7 |
| Example 4 | 2.2 | 2.5 | 3.0 |
| Comparative Example 1 | 1.3 | 1.4 | 1.4 |
| Comparative Example 2 | 1.2 | 1.5 | 1.6 |

As can be understood from the results in Table 1 and FIG. 1, in the sample of each Example, the supply of the anti oxidant to the rubber sheet was sufficient after 10 hours. Moreover, the anti oxidant supply amount increased with time. In the sample of each Comparative Example, the supply of the anti oxidant is insufficient even after 24 hours.

### INDUSTRIAL APPLICABILITY

It is thus possible to provide an anti oxidant supply composition and an anti oxidant supply material that enable replenishment of a rubber article with anti oxidant without taking a long time.

It is also possible to provide an anti oxidant supply method that enables replenishment of a tire with an anti oxidant without taking a long time and effectively suppresses a decrease in ozone resistance.

## Claims

1. An anti oxidant supply composition comprising:
a base material and 5 mass% or more of an amine-based anti oxidant,
wherein a solubility parameter (SP value) of the base material is 6.7 (cal/cm³)^{1/2} or more and less than 7.8 (cal/cm³)^{1/2}, wherein the base material contains at least a silicone-based polymer.

2. The anti oxidant supply composition according to claim 1, wherein the amine-based anti oxidant contains at least N-(1,3-dimethylbutyl)-N'-phenyl-p-phenylenediamine.

3. The anti oxidant supply composition according to claim 1 or claim 2, wherein the SP value of the base material is 6.7 (cal/cm³)^{1/2} to 7.6 (cal/cm³)^{1/2}.

4. An anti oxidant supply material comprising
the anti oxidant supply composition according to any one of claims 1 to 3.

5. The anti oxidant supply material according to claim 4, being in a form of a sheet of less than 0.5 mm in thickness.

6. A method of supplying anti oxidant to a tire, comprising
maintaining, for 8 hours or more, a state in which an outer surface of the tire is in contact with the anti oxidant supply material according to claim 4 or 5.

## Patentansprüche

1. Zusammensetzung zur Antioxidationsmittelbereitstellung, umfassend:
ein Basismaterial und 5 Massenprozent oder mehr eines Antioxidationsmittels auf Aminbasis,
wobei ein Löslichkeitsparameter (SP-Wert) des Basismaterials 6,7 (cal/cm³)^{1/2} oder mehr und weniger als 7,8 (cal/cm³)^{1/2} beträgt, wobei das Basismaterial mindestens ein silikonbasiertes Polymer enthält.

2. Zusammensetzung zur Antioxidationsmittelbereitstellung nach Anspruch 1, wobei das Antioxidationsmittel auf Aminbasis mindestens N-(1,3-Dimethylbutyl)-N'-phenyl-p-phenylendiamin enthält.

3. Zusammensetzung zur Antioxidationsmittelbereitstellung nach Anspruch 1 oder Anspruch 2, wobei der SP-Wert des Basismaterials 6,7 (cal/cm³)^{1/2} bis 7,6 (cal/cm³)^{1/2} beträgt.

4. Material zur Antioxidationsmittelbereitstellung, umfassend
die Zusammensetzung zur Antioxidationsmittelbereitstellung nach einem der Ansprüche 1 bis 3.

5. Material zur Antioxidationsmittelbereitstellung nach Anspruch 4, das in Form einer Folie mit einer Dicke von weniger als 0,5 mm vorliegt.

6. Verfahren zur Antioxidationsmittelbereitstellung zu einem Reifen, umfassend
Aufrechterhalten eines Zustands, in dem eine Außenfläche des Reifens mit dem Material zur Antioxidationsmittelbereitstellung nach Anspruch 4 oder 5 in Kontakt ist, für 8 Stunden oder länger.

## Revendications

1. Composition d'apport d'antioxydant comprenant :
un matériau de base et 5 % en masse ou plus d'un antioxydant à base d'amine,
dans laquelle un paramètre de solubilité (valeur de SP) du matériau de base est de 6,7 (cal/cm³)^{1/2} ou plus et moins de 7,8 (cal/cm³)^{1/2}, dans laquelle le matériau de base contient au moins un polymère à base de silicone.

2. Composition d'apport d'antioxydant selon la revendication 1, dans laquelle l'antioxydant à base d'amine contient au moins de la N-(1,3-diméthylbutyl)-N'-phényl-p-phénylènediamine.

3. Composition d'apport d'antioxydant selon la revendication 1 ou la revendication 2, dans laquelle la valeur de SP du matériau de base est de 6,7 (cal/cm³)^{1/2} à 7,6 (cal/cm³)^{1/2},

4. Matériau d'apport d'antioxydant comprenant
la composition d'apport d'antioxydant selon l'une quelconque des revendications 1 à 3.

5. Matériau d'apport d'antioxydant selon la revendication 4, se présentant sous la forme d'une feuille d'une épaisseur inférieure à 0,5 mm.

6. Procédé d'apport d'antioxydant à un pneu, comprenant
le maintien, pendant 8 heures ou plus, d'un état dans lequel une surface externe du pneu est en contact avec le matériau d'apport d'antioxydant selon la revendication 4 ou 5.
